# EUROPEAN PATENT SPECIFICATION

(11) **EP 2 312 077 B1**
(45) Date of publication and mention of the grant of the patent: **12.04.2017**
(21) Application number: 09013160.8
(22) Date of filing: 19.10.2009
(51) Int. Cl.: E04B 7/04, E04D 3/36, E04B 2/90

(54) **CONNECTING SYSTEM FOR THE CLADDING OF FRAMED CONSTRUCTIONS**
BEFESTIGUNGSSYSTEM ZUR VERKLEIDUNG VON RAHMENKONSTRUKTIONEN
SYSTEME DE CONNEXION POUR LE REVETEMENT DE CONSTRUCTIONS ENCADREES

(43) Date of publication of application: 20.04.2011
(73) Proprietor: Tata Steel UK Limited, London SW19 4WY (GB)
(72) Inventor: Adetunji, Israel, Chesterfield Derbyshire S41 7JS (GB); Kirkby, Christopher, Brough East Yorkshire HU15 1TH (GB)
(74) Representative: Blauw, Frans Gerard

(56) References cited:
- EP-A1- 0 016 291
- DE-U1- 9 114 137
- GB-A- 620 263
- US-A- 2 060 093
- US-A- 4 982 542

## Description

The present invention relates to a connecting system to connect parts of a cladding to a framed construction. With a framed construction any construction with frame members is meant and with cladding any material that can be mounted against the frame members to form a covering such as an inside or outside wall or roof covering.

With framed constructions it might prove to be difficult to mechanically fix a cladding to the frame members if no special fixing means have been provided to facilitate the fixing of a cladding. With the refurbishment of old framed constructions this might present major difficulties, especially where a new cladding has to be fixed against concrete frame members.

At present the method for fastening a cladding against an old framed construction with concrete frame members is to first fix a timber section to the concrete frame members by means of for instance using mechanical anchor bolts. The cladding is then fixed to the timber section. However, to be sure of a reliable connection between the timber sections and the concrete frame members in situ pull out tests of the connections have to be made to ascertain the structural integrity of the concrete members. Where necessary repairs to the concrete frame members have to be done which will mean a considerable increase of costs. The use of a timber section could also bring other problems such as possible warping and rotting of the timber section.

Another method for fastening a cladding against an old framed construction with concrete frame members is to put a steel saddle with a wide top flange over the existing concrete frame members and then fix the cladding by screwing fastening means through the cladding into the steel saddle cantilever flange to avoid screwing into the concrete frame members. Such steel saddles can only be used on horizontal frame members and have the further disadvantage that the connection between cladding and frame members is structurally weak. A particular risk for such a connection is wind uplift of the cladding which could result in serious damages not only to the cladding but also to the complete framed construction.

A known connecting system is described by US 4 982 542 A. The objective of the invention is to provide a connecting system comprising connecting clips and a longitudinal member, wherein the longitudinal member is attached to a number of clips, with which in a simple and cost effective manner a cladding can be fixed to a framed construction The objective of the present invention is achieved through the technical features of appended claim 1. The connecting clip according the invention is shaped to fit at least partly around a frame member. In practice this will mean that connecting clips in various shapes will be made to fit known shapes of frame members. Concrete and steel frame members are used in a number of specific shapes and dimensions so that for each specific frame member separate connecting clips are made. The sectional profile of the connecting clip is such that it closely follows part of the perimeter of the frame member in transverse direction. The connecting part follows at least that much of the perimeter of a frame member that it cannot be removed by pulling at the projecting part of the connecting clip. With the connecting clip according to the invention there is no need to fix any part thereof to a frame member with separate fixing means like bolts or screws.

The projecting part of the connecting clip provides that at that location there is sufficient space between the connecting clip and the frame member, embraced partly by the connecting clip, for the fixing means with which the cladding and/or any intermediate connecting means are fixed to the connecting clips.

According to a further aspect of the invention it is provided that to partly embrace a frame member the clip is provided at least at one side with two further legs wherein the sum of the angles enclosed between the first and successive legs is smaller than 270°. To avoid any misunderstanding with the sum of angles the angle between the first leg and the second leg plus the angle between the second and third leg is meant. Since the edge between two successive sides of a frame member may be rounded off with a certain radius, which can be rather large with some of the commonly used concrete frame members, the angle enclosed by two sides of the connecting clip could be the angle between a plane of a side and a tangent to a curved side of the connecting clip.

For most of the commonly used frame members the sum of the angles enclosed between the first and successive legs equals or is smaller than 180°. For instance with a frame member with successive sides perpendicular to each other the enclosed angle equals 180°. With a second enclosed angle that is an acute angle the sum of the angles will be smaller than 180°.

The connecting clip is made of steel. With steel with resilient properties the shaped connecting clip can be brought partly around the frame member by making use of the resilient properties of the steel. The connecting clip will return to its original shape when in the right position around the frame member. With the shape of the connecting clips with a number of successive legs the forces acting on the clip through the cladding act in such a direction on the sides of the clip that only tensional forces will act on the sides of the clips. As a consequence there is practically no risk that the connecting clips will be pulled loose from the frame members.

According to a further aspect of the invention it is provided that the clip comprises at least two constituent parts. A connecting clip with two separate parts is an embodiment that will be used with complex shaped frame members or where thick material has to be used with limited resilient properties. The parts of such a connecting clip can be connected by further connecting means, for example a connecting strip that is fixed to the successive parts of the connecting clip with screws or bolts.

According to another embodiment it is provided that the constituent parts have overlapping portions. With this embodiment the parts of the clips can be connected with a single screw or bolt which might be the screw or bolt with which the cladding is fixed to the connecting clip. In the latter case the overlapping portions form the projecting part of the clip.

According to still another embodiment it is provided that the overlapping portions are shaped to interlock with each other. This can be provided by shaping the overlapping portions such that a snap-fit joint system between the overlapping portions is accomplished. The advantages of such a snap-fit system are a simple and quick mounting of a connecting clip on a frame member and that the overlapping portions are kept in place without the need for further fixing means. For security the fixing means with which the cladding is fixed against the connecting clips can also be used as further fixing means for the snap-fit system of the overlapping portions of the connecting clip.

According another aspect of the invention it is provided that the width of the projecting part of the clip in a first plane at a distance from the first leg is larger than the width of the projecting part at the first leg. With such a shape of the projecting part of the connecting clip a snap-fit system with a connecting clip comprising two parts with overlapping portions can easily be provided for.

Another possibility with such a shaped projecting part is to slide a longitudinal connecting member over a number of projecting parts of successive connecting clips, wherein the longitudinal connecting member serves as an intermediate connecting means with which the cladding is fixed to the connecting clips and consequently to the frame member or frame members.

The smaller width of the projecting part does not necessarily have to be located at the level of the first leg. According a further embodiment it is provided that the width of the projecting part of the clip in a first plane at a distance from the first leg is larger than the width of the projecting part at a second plane between the first plane and the first leg.

The connecting system according to the present invention is provided to connect parts of a cladding to a framed construction comprising connecting clips as described previously and a longitudinal connecting member, wherein the longitudinal connecting member fit at least partly over the projecting parts of the connecting clips. With such a system the connecting points where the cladding has to be fixed to the connecting system can be chosen along the length of the longitudinal connecting member so that the fixing locations are not limited to the locations of the connecting clips.

Another advantage of the connecting system according the invention is that it is also possible to provide in a direction perpendicular to the frame members fixing points for the cladding at intermediate positions between the frame members and as closely spaced as desired. This is an advantage with for example widely spaced frame members and horizontal frame members of a roof construction.

According to the invention it is provided that the longitudinal connecting member has a sleeve shape with an opening in the length direction, wherein the width of the opening is smaller than the largest internal width of the longitudinal connecting member. The projecting part of the connecting clip is at least partly complementary to the inside shape of the sleeve with a first and second width wherein the first width is smaller than the second width and the portion with the first width is located at the first leg or between the first leg and the portion with the second width. With such a projecting part and sleeve the sleeve can be slid over the projecting part of the connecting clips and by means thereof be secured thereto in a direction at right angles to the sliding direction and the first leg of the connecting clip. This is further improved when the shape of the projecting part is complementary to the inside of the sleeve.

With a connecting clip that consists of parts with overlapping portions, wherein the overlapping portions form the projecting part, the sleeve and projecting part shaped as described above also provide that the parts are kept together or in case of a snap-fit system of the overlapping portions provide further security to keep the parts together.

According to the invention the longitudinal connecting member as seen in cross section has a U-shape, both legs of the U-shaped member enclosing an acute angle with the portion between the legs.

According to a further embodiment according to the invention it is provided that the longitudinal connecting member at the side facing away from the connecting clips when mounted has a curved surface transverse to the length direction of the longitudinal connecting member. Such a shaped longitudinal connecting member can favourably be used with corrugated plates in the length direction of the ridges.

According to still another embodiment it is provided that the longitudinal connecting member at the side facing away from the connecting clips when mounted has an undulating surface in the length direction of the longitudinal connecting member. Such a shaped longitudinal connecting member can favourably be used with corrugated plates in a direction transverse to the length direction of the ridges.

The corrugated plates mentioned above can be single plates or form part of a composite panel such as an insulated composite panel.

The connecting system according to the invention is further elucidated on hand of the examples shown in the drawing, in which:
fig. 1 shows a number of different connecting clips;
fig. 2 shows a number of different commonly used concrete frame members in cross-section;
fig. 3 shows an isometric view of a frame member with connecting clips and longitudinal connecting member;
fig. 4 shows a cross-section of the frame member of fig.3, and
fig. 5 shows a perspective view of a frame member with connecting clips, longitudinal connecting member and a composite panel fixed to the connecting system.

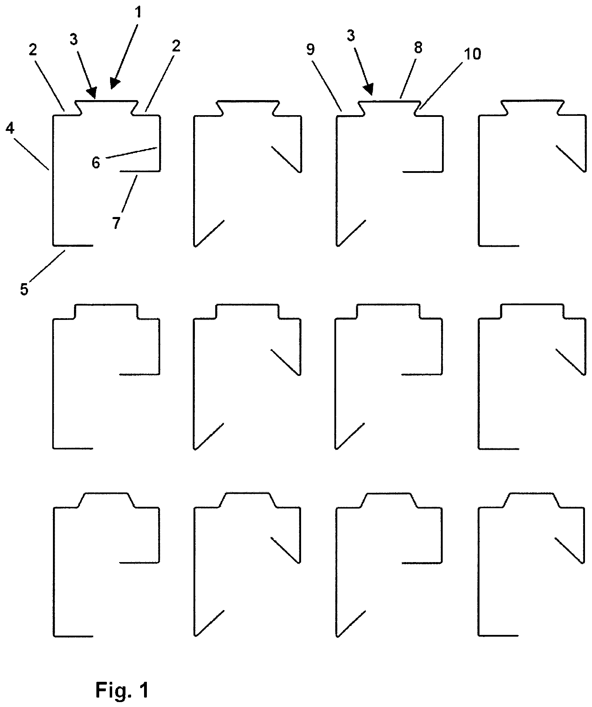

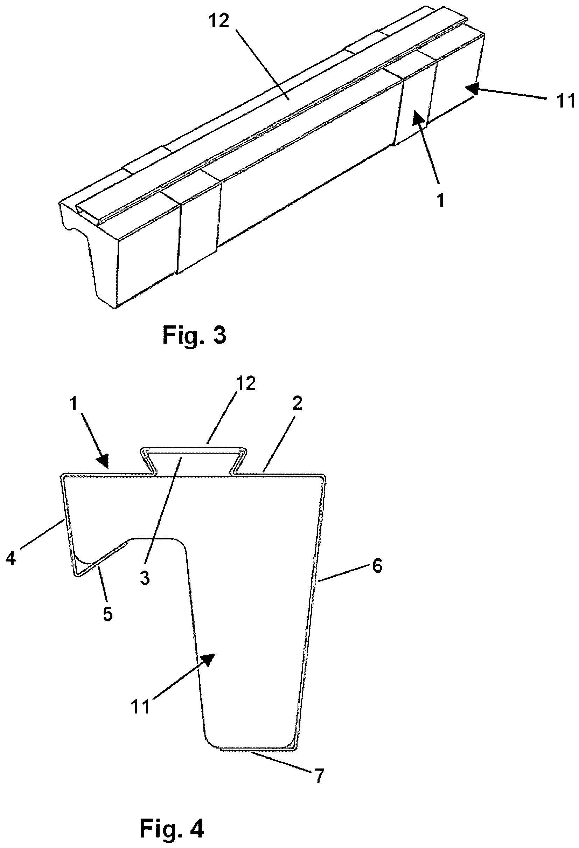

In fig. 1 three rows of connecting clips 1 are shown, wherein the projecting parts 3 of the connecting clips are different for each row. In each row 4 different shaped connecting clips are shown as far as it concerns the further legs 4-7 of the connecting clips 1. A connecting clip 1 has a first leg 2 with the projecting part 3. In the example according to the drawing the projecting part 3 is bent out of the same strip from which the first leg 2 and all other legs 4-7 are bent. It is also possible to provide a projecting part by fixing a separate part as projecting part 3 on the first leg 2, for example by welding such a part to the first leg 2. The space between the projecting part 3 and the plane of the first leg 2 is sufficient to receive fixing means of different length with which the cladding is fixed to the connecting clip or the longitudinal connecting member 12 (see fig. 3) of the connecting system.

In the shown examples the further legs 4-7 on both sides of the first leg 2 are provided in pairs 4,5 and 6,7. Each leg of a pair of further legs of the connecting clips shown in the example of fig.1 encloses a right angle or an acute angle with the previous leg of the connecting clip 1. It is also possible to have more than 2 further legs at a side of the first leg 2.

The projecting part 3 shown in the upper row has a U shape with a base portion 8 and legs 9,10, wherein the legs 9,10 enclose an acute angle with base portion 8. With such a shape of the projecting part 3 and a longitudinal connecting member with a complementary sleeve shape, the longitudinal connecting member 12 is fixed to the projecting parts in a direction at a right angle therewith.

The projecting part 3 of the connecting clips shown in the middle and lower row are embodiments not forming part of the present invention and wherein the projecting part 3 has respectively a U shape with the legs 9,10 at right angles to the base portion 8 and at obtuse angles thereto. With such projecting parts 3 it is necessary to fix the longitudinal connecting member to the connecting clips 1 with fixing means like screws or bolts and nuts.

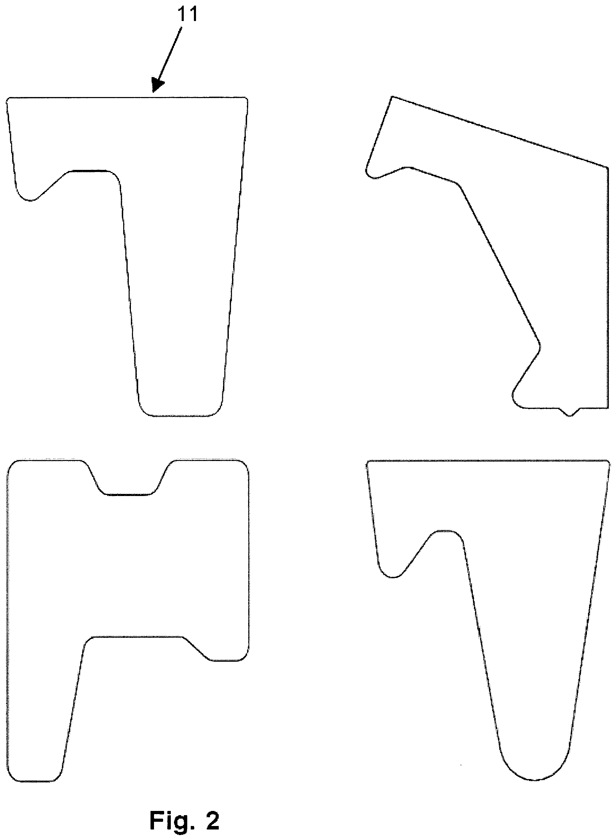

Fig. 2 shows a number of concrete frame members 11 in cross-section which frame members are used quite often in industrial buildings. From these examples it can be seen that the connecting clips need to be manufactured in a number of different shapes to fit all commonly used frame members. With steel and wooden frame members the number of different shapes is limited to a few standard shapes, but a number of different sizes are used in the building industry. With some of these concrete frame members the connecting clips also need to have rounded sides or a transition between successive sides with a considerable radius. With corners of the frame member with smaller radiuses it will not be necessary to closely follow such rounding but bending of the legs of the connecting clip along a straight line will do.

Fig. 3 shows an isometric view of a concrete frame member 11 with connecting clips 1 and longitudinal connecting member 12. The longitudinal connecting member 12 is slid as a sleeve over the projecting parts 3 of the clips 1. With the longitudinal connecting member 12 fixed to at least one connecting clip ensures that the longitudinal connecting member 12 will stay in position. The fixing of the longitudinal connecting member 12 to a connecting clip can be done with separate fixing means or by using the fixing means for the cladding in a position right in line with a connecting clip 1.

The contact area of each connecting clip 1 with a frame member 11 and the fit of each connecting clip to the shape of the frame member 11 ensures that sliding of a connecting clip in the length direction of frame member is almost impossible, see the cross-section shown in fig. 4. By fixing the longitudinal connecting member 12 to one or more of the connecting clips ensures a fixed position of the connecting system.

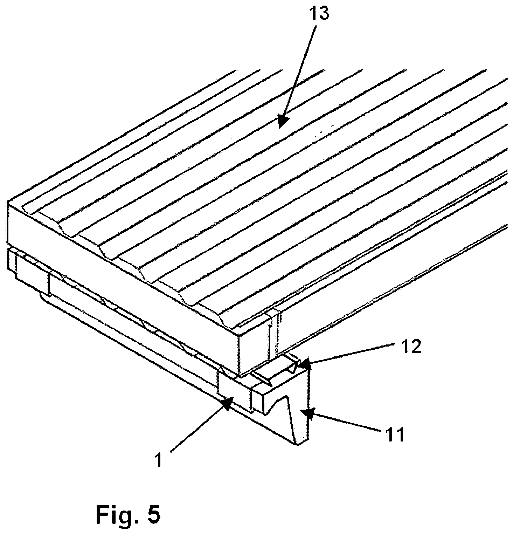

Fig. 5 shows a perspective view of a frame member 11 with connecting clips 1, longitudinal connecting member 12 and a composite panel 13 fixed to the connecting system. The connecting system according to the invention is flexible, versatile and suitable for all cladding types such as built-up system, composite panel and structural liner tray or cassette tray.

## Claims

1. Connecting system to connect parts of a cladding to a framed construction comprising two or more connecting clips (1), wherein each clip (1) is shaped to fit at least partly around a frame member, the clip having a first leg (2) that is to face the cladding and that is provided at both ends with at least one further leg (4-7), wherein each further leg (4-7) is at an angle with the previous leg and wherein the first leg is provided with a projecting part (3), and a longitudinal connecting member (12), wherein the longitudinal connecting member (12) fits at least partly over projecting parts (3) of the connecting clips (1), **characterised in that**
- the clip is made of steel with resilient properties and that the projecting part (3) has a U-shape, the legs (9, 10) thereof enclosing an acute angle with the base portion (8) of the U-shape of projecting part (3),
- the longitudinal connecting member (12) has a sleeve shape with an opening in the length direction, wherein the width of the opening is smaller than the largest internal width of the longitudinal connecting member (12),
- the longitudinal connecting member (12) seen in cross section has a U-shape, both legs of the U-shaped connecting member (12) enclosing an acute angle with the portion between the legs and **in that**
- the projecting part (3) of the connecting clip (1) is at least partly complementary to the inside shape of the connecting member (12).

2. Connecting system according to claim 1, wherein the clip (1) at least at one side is provided with two further legs (4-7) wherein the sum of the angles enclosed between the first and successive legs is smaller than 270°.

3. Connecting system according to claim 2, wherein the sum of the angles enclosed between the first (2) and successive legs (4-7) equals or is smaller than 180°.

4. Connecting system according to one or more of claims 1-3, wherein the clip (1) comprises at least two constituent parts.

5. Connecting system according to claim 4, wherein the constituent parts have overlapping portions.

6. Connecting system according to claim 5, wherein the overlapping portions are shaped to interlock with each other.

7. Connecting system according to claim 4 or 5, wherein the overlapping portions form the projecting part (3) of the clip (1).

8. Connecting system according to one or more of claims 1-7, wherein the width of the projecting part (3) of the clip (1) in a first plane at a distance from the first leg (2) is larger than the width of the projecting part at the first leg (2).

9. Connecting system according to one or more of claims 1-7, wherein the width of the projecting part (3) of the clip (1) in a first plane at a distance from the first leg (2) is larger than the width of the projecting part (3) at a second plane between the first plane and the first leg (2).

10. Connecting system according to one or more of claims 1-9, wherein the longitudinal connecting member (12) at the side facing away from the connecting clips (1) when mounted has a curved surface transverse to the length direction of the longitudinal connecting member (12).

11. Connecting system according to one or more of claims 1-9, wherein the longitudinal connecting member (12) at the side facing away from the connecting clips (1) when mounted has an undulating surface in the length direction of the longitudinal connecting member (12).

## Patentansprüche

1. Verbindungssystem, um Teile einer Verkleidung einer Rahmenkonstruktion zu verbinden, das zwei oder mehr Verbindungsklammern (1) umfasst, wobei jede Klammer (1) gestaltet wird, mindestens teilweise um ein Rahmenelement zu passen, wobei die Klammer einen ersten Schenkel (2) hat, der der Verkleidung zugewandt wird und der an beiden Enden mit mindestens einem weiteren Schenkel (4 bis 7) bereitgestellt wird, wobei jeder weitere Schenkel (4 bis 7) in einem Winkel mit dem vorherigen Schenkel steht und wobei der erste Schenkel mit einem vorspringenden Teil (3) und einem längs gerichteten Verbindungselement (12) bereitgestellt wird, wobei das längs gerichtete Verbindungselement (12) mindestens teilweise über vorspringende Teile (3) der Verbindungsklammern (1) passt, **dadurch gekennzeichnet, dass**
- die Klammer aus Stahl mit elastischen Eigenschaften hergestellt wird und dass das vorspringende Teil (3) eine U-förmige Gestalt hat, wobei die Schenkel (9, 10) desselben einen spitzen Winkel mit dem Sockelabschnitt (8) der U-förmigen Gestalt des vorspringenden Teils (3) umschließen,
- das längs gerichtete Verbindungselement (12) eine Hülsenform mit einer Öffnung in der Längsrichtung hat, wobei die Breite der Öffnung kleiner als die größte innere Breite des längs gerichteten Verbindungselements (12) ist,
- das längs gerichtete Verbindungselement (12) im Querschnitt gesehen eine U-förmige Gestalt hat, wobei beide Schenkel des U-gestalteten Verbindungselements (12) einen spitzen Winkel mit dem Abschnitt zwischen den Schenkeln umschließen und dadurch
- das vorspringende Teil (3) der Verbindungsklammer (1) mindestens teilweise komplementär zu der Innenseitenform des Verbindungselements (12) ist.

2. Verbindungssystem nach Anspruch 1, wobei die Klammer (1) mindestens an einer Seite mit zwei weiteren Schenkeln (4 bis 7) bereitgestellt wird, wobei die Summe der eingeschlossenen Winkel zwischen dem ersten und den fortlaufenden Schenkeln kleiner als 270° ist.

3. Verbindungssystem nach Anspruch 2, wobei die Summe der eingeschlossenen Winkel zwischen dem ersten (2) und den fortlaufenden Schenkeln (4 bis 7) gleich oder kleiner als 180° ist.

4. Verbindungssystem nach einem oder mehreren der Ansprüche 1 bis 3, wobei die Klammer (1) mindestens zwei konstituierende Teile umfasst.

5. Verbindungssystem nach Anspruch 4, wobei die konstituierenden Teile überlappende Abschnitte haben.

6. Verbindungssystem nach Anspruch 5, wobei die überlappenden Abschnitte gestaltet werden, sich miteinander zu verriegeln.

7. Verbindungssystem nach Anspruch 4 oder 5, wobei die überlappenden Abschnitte das vorspringende Teil (3) der Klammer (1) bilden.

8. Verbindungssystem nach einem oder mehreren der Ansprüche 1 bis 7, wobei die Breite des vorspringenden Teils (3) der Klammer (1) in einer ersten Ebene bei einem Abstand von dem ersten Schenkel (2) größer als die Breite des vorspringenden Teils bei dem ersten Schenkel (2) ist.

9. Verbindungssystem nach einem oder mehreren der Ansprüche 1 bis 7, wobei die Breite des vorspringenden Teils (3) der Klammer (1) in einer ersten Ebene bei einem Abstand von dem ersten Schenkel (2) größer als die Breite des vorspringenden Teils (3) bei einer zweiten Ebene zwischen der ersten Ebene und dem ersten Schenkel (2) ist.

10. Verbindungssystem nach einem oder mehreren der Ansprüche 1 bis 9, wobei das längs gerichtete Verbindungselement (12) an der Seite, die von den Verbindungsklammern (1) weg weist, wenn es befestigt wird, eine zu der Längsrichtung des längs gerichteten Verbindungselements (12) querlaufende gekrümmte Fläche hat.

11. Verbindungssystem nach einem oder mehreren der Ansprüche 1 bis 9, wobei das längs gerichtete Verbindungselement (12) an der Seite, die von der Verbindungsklammer (1) weg weist, wenn es befestigt wird, eine wellige Oberfläche in der Längsrichtung des längs gerichteten Verbindungselements (12) hat.

## Revendications

1. Système de connexion permettant de connecter des parties d'un revêtement à une construction à cadre comprenant deux ou plusieurs clips de connexion (1), où chaque clip
(1) est conformé pour entourer au moins partiellement un élément de cadre, le clip comportant une première branche (2) devant faire face au revêtement et qui est pourvue aux deux extrémités d'au moins une branche supplémentaire (4-7), où chaque branche supplémentaire (4-7) forme un angle avec la branche précédente et où la première branche est pourvue d'une partie saillante (3), et un élément de connexion longitudinal (12), où l'élément de connexion longitudinal (12) recouvre au moins partiellement des parties saillantes (3) des clips de connexion (1), **caractérisé en ce que**
- le clip est en acier présentant des propriétés élastiques et que la partie saillante (3) est en forme de U, dont les branches (9, 10) renferment un angle aigu avec la partie de base (8) de la forme en U de la partie saillante (3),
- l'élément de connexion longitudinal (12) est en forme de gaine avec une ouverture dans le sens de la longueur, où la largeur de l'ouverture est plus petite que la plus grande largeur intérieure de l'élément de connexion longitudinal (12),
- l'élément de connexion longitudinal (12), vu en section transversale est en forme en U, les deux branches de l'élément de connexion en forme de U (12) renfermant un angle aigu avec la partie entre les branches et **en ce que**
- la partie saillante (3) du clip de connexion (1) est au moins partiellement complémentaire de la forme interne de l'élément de connexion (12).

2. Système de connexion selon la revendication 1, où le clip (1) au moins d'un côté est pourvu de deux branches supplémentaires (4-7), où la somme des angles renfermés entre la première branche et les branches successives est inférieure à 270°.

3. Système de connexion selon la revendication 2, où la somme des angles renfermés entre la première branche (2) et les branches successives (4-7) est inférieure ou égale à 180°.

4. Système de connexion selon une ou plusieurs des revendications 1 à 3, où le clip (1) comprend au moins deux éléments constitutifs.

5. Système de connexion selon la revendication 4, où les éléments constitutifs présentent des parties chevauchantes.

6. Système de connexion selon la revendication 5, où les parties chevauchantes sont conformées pour s'imbriquer les unes dans les autres.

7. Système de connexion selon les revendications 4 ou 5, où les parties chevauchantes constituent la partie saillante (3) du clip (1).

8. Système de connexion selon une ou plusieurs des revendications 1 à 7, où la largeur de la partie saillante (3) du clip (1) dans un premier plan à une distance de la première branche (2) est supérieure à la largeur de la partie saillante au niveau de la première branche (2).

9. Système de connexion selon une ou plusieurs des revendications 1 à 7, où la largeur de la partie saillante (3) du clip (1) dans un premier plan à une distance de la première branche (2) est supérieure à la largeur de la partie saillante (3) au niveau d'un second plan entre le premier plan et la première branche (2).

10. Système de connexion selon une ou plusieurs des revendications 1 à 9, où l'élément de connexion longitudinal (12) sur le côté opposé des clips de connexion (1) après montage présente une surface incurvée transversale au sens de la longueur de l'élément de connexion longitudinal (12).

11. Système de connexion selon une ou plusieurs des revendications 1 à 9, où l'élément de connexion longitudinal (12) sur le côté opposé des clips de connexion (1) après montage présente une surface ondulée dans le sens de la longueur de l'élément de connexion longitudinal (12).
